# EUROPÄISCHE PATENTANMELDUNG

(11) **EP 2 400 085 A2**
(43) Veröffentlichungstag der Anmeldung: **28.12.2011**
(21) Anmeldenummer: 11004015.1
(22) Anmeldetag: 16.05.2011
(51) Int. Cl.: E05B 47/06

(54) **Elektronischer Schließzylinder**

(30) Priorität: 24.06.2010 DE 102010017569
(71) Anmelder: Dorma GmbH + Co. KG, 58256 Ennepetal (DE)
(72) Erfinder: Glanz, Michael, 40764 Langenfeld (DE); Lange, Siegfried, Dr., 58339 Breckerfeld (DE); Brieseck, Bernd, 58840 Plettenberg (DE)

(57) **Zusammenfassung**

Die Erfindung betrifft einen elektronischen Schließzylinder (1) einer Schließvorrichtung für einen beweglichen Flügel wie eine Tür, ein Tor, ein Fenster oder dergleichen mit einer Einrichtung zur Energieversorgung. Erfindungsgemäß ist vorgesehen, dass der elektronische Schließzylinder (1) zur Bildung der Einrichtung zur Energieversorgung wenigstens eine Brennstoffzelle (2) aufweist.

## Beschreibung

Die vorliegende Erfindung betrifft einen elektronischen Schließzylinder einer Schließvorrichtung für einen beweglichen Flügel wie eine Tür, ein Tor, ein Fenster oder dergleichen mit einer Einrichtung zur Energieversorgung.

### STAND DER TECHNIK

Elektronische Schließzylinder weisen elektrisch zu versorgende Komponenten auf, so dass eine Einrichtung zur Energieversorgung notwendig ist, um die Komponenten mit elektrischer Leistung zu versorgen. Hierzu sind externe Einrichtungen zur Energieversorgung bekannt, und die elektrische Verbindung zwischen der Schließvorrichtung und der externen Einrichtung zur Energieversorgung erfolgt über elektrische Leitungen. Diese werden zwischen dem beweglichen Flügel und der Aufnahme des Flügels verlegt.

Weiterhin sind elektronische Schließzylinder von Schließvorrichtungen bekannt, die eine interne Einrichtung zur Energieversorgung besitzen. Diese Einrichtungen zur Energieversorgung basieren auf Batterien, Akkus oder Solarzellen, so dass die Schließvorrichtung energieunabhängig und damit autark betrieben werden kann.

Die elektrisch zu versorgenden Komponenten elektronischer Schließzylinder betreffen beispielsweise eine Kommunikationseinrichtung, die zur drahtlosen Kommunikation des elektronischen Schließzylinders mit einem Identifikationsmittel dient. Hierzu weist der elektronische Schließzylinder ein Lesemodul auf, und der Schließzylinder kann ohne konventionellen, mechanisch wirkenden Schlüssel betrieben werden. Das Identifikationsmittel wird von einem Benutzer mitgeführt und kann beispielsweise in Form eines Lesechips oder in Form einer Chipkarte ausgebildet sein. Authentifiziert sich die Person mit dem Identifikationsmittel, kann der elektronische Schließzylinder entweder manuell betätigt werden oder der Schließzylinder weist eine Motoreinheit auf, die den Schließzylinder mechanisch betätigt, um beispielsweise die Schließvorrichtung zu öffnen.

Schließzylinder bilden einen Bestandteil einer Schließvorrichtung und sind grundsätzlich in der Schließvorrichtung austauschbar ausgeführt. Der Stand der Technik kennt hingegen lediglich autark wirkende Einrichtungen zur Energieversorgung, die in der Schließvorrichtung selbst angeordnet sind, nicht jedoch energieautarke Schließzylinder.

Aus der DE 10 2008 001 693 B3 ist ein elektronischer Schließzylinder einer Schließvorrichtung für einen beweglichen Flügel wie eine Tür bereits bekannt. Die Einrichtung zur Energieversorgung umfasst hierzu Batterien, die im Schließzylinder angeordnet sind.

Dabei ergibt sich der Nachteil, dass die verfügbaren Leistungen, die durch Batterien oder Akkus im Schließzylinder bereitgestellt werden können, vergleichsweise gering sind. Ferner ergibt sich bei der Verwendung von Akkus ein vergleichsweise kurzer Ladezyklus, wobei bei Verwendung von Batterien der Schließzylinder wenigstens aus der Schließvorrichtung ausgebaut werden muss, um die Batterien zu wechseln. Das Leistungs- Bauraumverhältnis ist bei Akkus oder Batterien relativ schlecht ausgebildet, so dass bei der erforderlichen Versorgungsleistung des elektronischen Schließzylinders ein großer Bauraum für die Einrichtung zur Energieversorgung erforderlich ist.

Es ist daher die Aufgabe der vorliegenden Erfindung, einen elektronischen Schließzylinder einer Schließvorrichtung für einen beweglichen Flügel mit einer Einrichtung zur Energieversorgung zu verbessern, wobei die Einrichtung zur Energieversorgung ein gutes Leistungs- Bauraumverhältnis aufweisen soll und wobei eine lange Leistungs- Bereitschaftszeit wünschenswert ist.

Diese Aufgabe wird ausgehend von einem elektronischen Schließzylinder einer Schließvorrichtung gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

### OFFENBARUNG DER ERFINDUNG

Die Erfindung schließt die technische Lehre ein, dass der elektronische Schließzylinder zur Bildung der Einrichtung zur Energieversorgung wenigstens eine Brennstoffzelle aufweist. Damit wird der Vorteil genutzt, eine autarke, integrierte Einrichtung zur Energieversorgung auf Basis einer Brennstoffzelle in einem elektronischen Schließzylinder vorzusehen. Brennstoffzellen zeichnen sich durch eine hohe Energiedichte aus, so dass die Bereitstellung einer großen Energie bei vergleichsweise kleinem Bauraum ermöglicht wird. Weiterhin bieten Brennstoffzellen als Einrichtung zur Energieversorgung den Vorteil, dass keine Selbstentladung erfolgt, beispielsweise wie diese bei einem Akku oder einer Batterie erfolgt. Wird eine elektrische Energie in nur kurzen Zeitabschnitten gefordert, und soll der elektronische Schließzylinder eine lange Standby-Zeit ermöglichen, können Brennstoffzellen als Einrichtung zur Energieversorgung besonders vorteilhaft eingesetzt werden.

Neuere Entwicklungen ermöglichen Mini-Brennstoffzellen, beispielsweise mit Abmessungen von 3 mm x 3 mm bei einer Dicke von lediglich 1 mm. Weiterhin können Brennstoffzellen die geometrische Gestalt von Batterien oder Akkus aufweisen, so dass auf eine konventionelle Einsatzumgebung der Brennstoffzelle zurückgegriffen werden kann.

Brennstoffzellen sind galvanische Zellen, die chemische Reaktionsenergie eines kontinuierlich zugeführten Brennstoffes und eines Oxidationsmittels in elektrische Energie wandelt. Die Brennstoffzelle zur Bildung der Einrichtung zur Energieversorgung in einem elektronischen Schließzylinder kann mit Wasserstoff betrieben werden, wobei auch Methanol und/oder weitere Kohlenwasserstoffe als Energieträger zum Einsatz kommen können.

Mit besonderem Vorteil kann die Brennstoffzelle als Hybrid- Brennstoffzelle ausgebildet sein, die wenigstens eine weitere Komponente wie ein Lithium- Polymer- Akkumulator, eine Brennstoffpumpe, einen Kontrollschaltkreis und/oder Brennstoffspeicher aufweist. Die vorliegend als Brennstoffzelle beschriebene Einheit kann folglich weitere Funktionskomponenten umfassen, so dass die Brennstoffzelle nicht nur die galvanische Zelle selbst beschreibt, sondern weitere Komponenten wie beispielsweise eine Brennstoffpumpe, einen Kontrollschaltkreis und/oder einen Brennstoffspeicher umfassen kann. Eine Hybrid- Brennstoffzelle kombiniert eine Brennstoffzelle mit einer Lithium- Polymer- Zelle, welche Lithium- Polymer-Zelle eine sekundäre Energiequelle darstellt und die mit einem kleinen Bauraum ausgeführt sein kann. Umfasst die Brennstoffzelle neben der eigentlichen galvanischen Zelle einen Brennstoffspeicher, bildet die Brennstoffzelle eine abgeschlossene Einheit, die ohne Zu- oder Abfuhr von Fluiden elektrische Leistung zur Verfügung stellen kann. Insbesondere das Reaktionsprodukt Wasser kann in einen speziell dafür vorgesehenen Speicher gelangen, der ebenfalls Bestandteil der Brennstoffzelle sein kann.

Weiterführend kann der Brennstoffspeicher auswechselbar im und/oder am Schließzylinder angeordnet sein oder der Brennstoffspeicher weist eine Einrichtung zum Nachfüllen von Brennstoff in den Brennstoffspeicher auf. Die Einrichtung zum Nachfüllen von Brennstoff in den Brennstoffspeicher kann derart ausgestaltet sein, dass das Nachfüllen auch bei eingebautem Schließzylinder mit Brennstoffzelle erfolgen kann. Der Brennstoff, beispielsweise Wasserstoff oder Methanol, kann aus einem Druckbehälter über ein Nachfüllventil in den Brennstoffspeicher übergeben werden.

Nach einer weiteren vorteilhaften Ausführungsform des elektronischen Schließzylinders mit einer Brennstoffzelle kann diese lösbar im oder am Schließzylinder angeordnet sein. Insbesondere kann die Brennstoffzelle derart im oder am Schließzylinder angeordnet sein, dass diese austauschbar ist, wenn der Schließzylinder in der Schließvorrichtung eingebaut ist. Die Brennstoffzelle kann in einer Aufnahmetasche im Schließzylinder einsetzbar sein, welche Aufnahmetasche von der Außenseite der Schließvorrichtung erreichbar ist, so dass die Brennstoffzelle auch dann austauschbar ist, wenn der Schließzylinder in der Schließvorrichtung eingebaut ist.

Mit weiterem Vorteil kann der Schließzylinder ein Lesemodul und/oder einen Knauf aufweisen, wobei die Brennstoffzelle im oder am Lesemodul und/oder im Knauf angeordnet ist. Der elektronische Schließzylinder beschreibt vorliegend nicht lediglich das Schließzylindermodul mit einem Schließzylinderkern und einem Schließelement, sondern eine Einheit, die ferner ein Lesemodul und/oder einen Knauf umfassen kann.

Insbesondere wenn die Brennstoffzelle als Einrichtung zur Energieversorgung austauschbar im Schließzylinder angeordnet sein soll, wenn der Schließzylinder in der Schließvorrichtung eingebaut ist, bieten sich Vorteile, wenn die Brennstoffzelle im Lesemodul und/oder im Knauf angeordnet ist. Das Lesemodul bildet eine Art Knauf mit elektronischen Komponenten, die zur Kommunikation mit einem Identifikationsmittel dienen. Daher ragt das Lesemodul ebenfalls wie ein Knauf aus der Vorderseite der Schließvorrichtung hervor, so dass sich eine vorteilhafte Austauschbarkeit der Brennstoffzelle aus dem Lesemodul oder aus dem Knauf ergibt. Erfindungsgemäß kann auch nur der Brennstoffspeicher im Lesemodul und/oder im Knauf angeordnet werden, und die Brennstoffzelle befindet sich in einer inneren Sektion des Schließzylinders.

Der elektronische Schließzylinder und insbesondere das Lesemodul kann eine elektronische Kommunikationseinrichtung zur draht- beziehungsweise berührungslosen Kommunikation mit einem elektronischen Identifikationsmittel aufweisen, welche Kommunikationseinrichtung vorzugsweise im Schließzylinder oder im Lesemodul angeordnet ist, wobei die elektronische Kommunikationseinrichtung mittels der Einrichtung zur Energieversorgung gespeist wird.

Weiterführend kann der elektronische Schließzylinder eine Motoreinheit und/oder eine Kupplungseinheit aufweisen, durch die ein Schließelement des Schließzylinders aktivierbar ist, wobei die Motoreinheit beziehungsweise die Kupplungseinheit ebenso wie die elektronische Kommunikationseinrichtung mittels der Einrichtung zur Energieversorgung gespeist werden kann. Soll die Brennstoffzelle und/oder der Brennstofftank im Lesemodul oder im Knauf angeordnet werden, kann das Lesemodul oder der Knauf eine Aufnahmetasche aufweisen, in die die Brennstoffzelle oder auch nur der Brennstoffspeicher einsetzbar ist und elektrisch mit dem Schließzylinder kontaktiert werden kann.

Die Aufgabe der vorliegenden Erfindung wird ferner gelöst durch eine Schließvorrichtung mit einem elektronischen Schließzylinder für einen beweglichen Flügel wie eine Tür, ein Tor, ein Fenster oder dergleichen mit einer Einrichtung zur Energieversorgung, wobei vorgesehen ist, dass eine Brennstoffzelle zur Bildung der Einrichtung zur Energieversorgung im elektronischen Schließzylinder angeordnet ist. Die für den elektronischen Schließzylinder vorstehend bezeichneten Merkmale können für die Schließvorrichtung mit einem elektronischen Schließzylinder ebenfalls Verwendung finden.

### BEVORZUGTES AUSFÜHRUNGSBEISPIEL

Weitere, die Erfindung verbessernde Maßnahmen werden nachstehend gemeinsam mit der Beschreibung eines bevorzugten Ausführungsbeispiels der Erfindung anhand der Figuren näher dargestellt.

Es zeigt:
- Figur 1: eine perspektivische Ansicht eines Ausführungsbeispiels eines elektronischen Schließzylinders gemäß der vorliegenden Erfindung,
- Figur 2: der elektronische Schließzylinder gemäß der Figur 1 in zerlegten Zustand,
- Figur 3: eine weitere perspektivische Ansicht des elektronischen Schließzylinders gemäß Figur 1 und 2 mit einer detaillierten Ansicht der Einrichtung zur Energieversorgung, die als Brennstoffzelle ausgeführt ist und
- Figur 4: ein Diagramm einer Kommunikationseinrichtung zwischen einem elektronischen Schließzylinder und einem Identifikationsmittel.

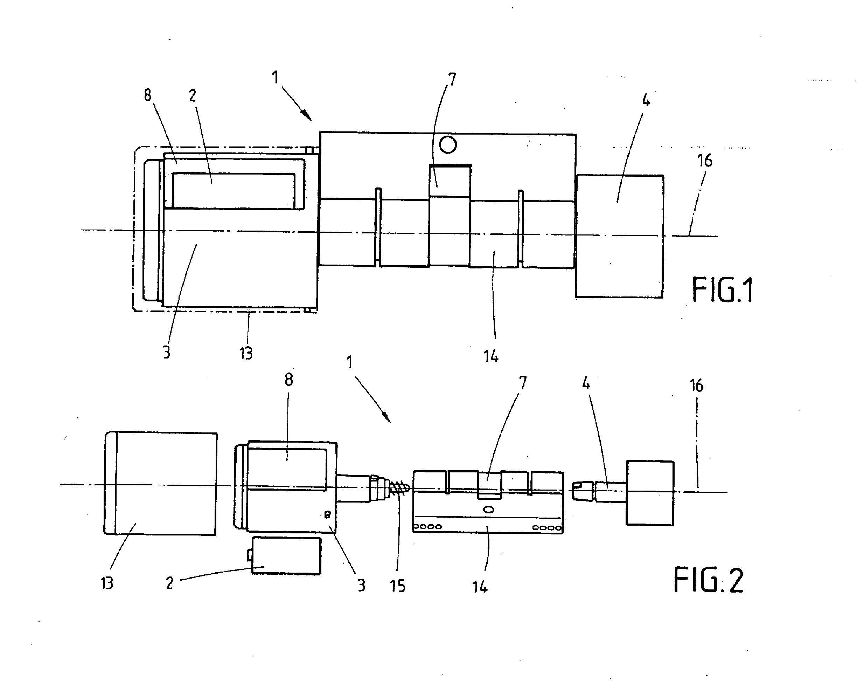

Figur 1 zeigt in einer perspektivischen Ansicht ein Ausführungsbeispiel eines elektronischen Schließzylinders 1. Dieser ist zum Einbau in eine Schließvorrichtung vorgesehen, beispielsweise in einem beweglichen Flügel wie einer Tür, einem Tor einem Fenster oder dergleichen. Der elektronische Schließzylinder 1 weist ein Schließzylindermodul 14 auf, und wird in eine Schließvorrichtung eingebaut. Ein Schließelement 7 des Schließzylindermoduls 14 kann um eine Längsachse 16 des elektronischen Schließzylinders 1 rotieren und mit einer Schließmechanik der Schließvorrichtung zusammenwirken.

Die Ausführungsart des Schließzylindermoduls 14 entspricht nicht der konventionellen Bauart, nach der das Schließzylindermodul 14 zur Einführung eines Schlüssels ausgeführt ist. Vielmehr besitzt der elektronische Schließzylinder 1 ein Lesemodul 3, das zur Kommunikation mit einem Identifikationsmittel ausgeführt wäre. Authentifiziert sich eine Person mit einem Identifikationsmittel, in dem das Identifikationsmittel durch das Lesemodul 3 erkannt wird, so kann durch manuelle Bedienung des Lesemoduls 3 ein Kern im Schließzylindermodul 14 gedreht werden, und das Schließelement 7 kann aktiviert werden. Alternativ kann das Lesemodul 3 eine Motoreinheit aufweisen, so dass das Schließelement 7 durch elektromotorische Kraft bewegt wird, beispielsweise um die Schließvorrichtung zu öffnen, wenn ein Identifikationsmittel positiv erkannt wurde. Auf der dem Lesemodul 3 gegenüberliegenden Seite weist der elektronische Schließzylinder 1 einen Knauf 4 auf, der zur manuellen Bedienung ausgeführt ist. Der Knauf 4 kann um die Längsachse 16 des Schließzylinders 1 gedreht werden, so dass ebenfalls das Schließelement 7 aktiviert werden kann. Folglich wird der Schließzylinder 1 so in die Schließvorrichtung eingebaut, dass der Knauf 4 beispielsweise zur Rauminnenseite weist, von der aus die Schließvorrichtung auch ohne Identifikationsmittel bedient werden darf.

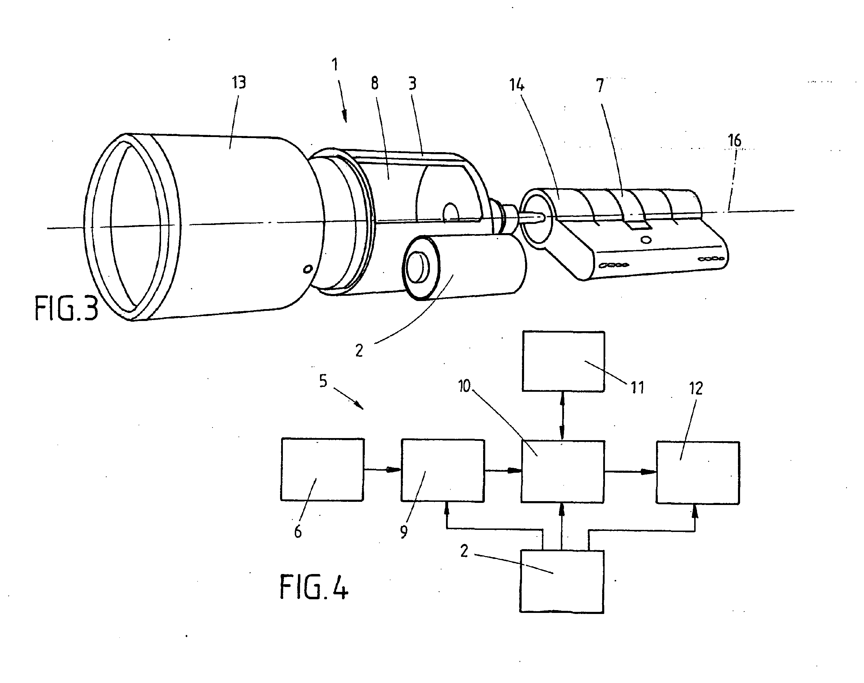

Auf dem Lesemodul 3 kann eine Kappe 13 aufgeschoben werden, die jedoch geschnitten dargestellt ist. Folglich ist eine Aufnahmetasche 8 im Lesemodul 3 sichtbar, in welche eine Brennstoffzelle 2 zur Bildung einer Einrichtung zur Energieversorgung des Schließzylinders 1 eingebracht ist. Da das Lesemodul 3 auch im eingebauten Zustand des elektronischen Schließzylinders in der Schließvorrichtung aus dem beweglichen Flügel hervorsteht, kann durch einfache Entnahme der Kappe 13 die Brennstoffzelle 2 ausgetauscht werden. Eine detailliertere Ansicht des elektronischen Schließzylinders 1 mit einer Brennstoffzelle 2 als Einrichtung zur Energieversorgung zeigen die Figuren 2 und 3.

In den Figuren 2 und 3 sind perspektivische Ansichten eines elektronischen Schließzylinders 1 gemäß der vorliegenden Erfindung dargestellt. In den Aussichten ist der Schließzylinder 1 teilweise in seine Bestandteile zerlegt dargestellt. Kern des Schließzylinders 1 bildet das Schließzylindermodul 14, welches im beweglichen Flügel in die Schließvorrichtung eingesetzt werden kann. Das Schließelement 7 des Schließzylindermoduls 14 kann um die Längsachse 16 rotiert werden. Zur Rotation des Schließelementes 7 kann entweder der Knauf 4 manuell um die Längsachse 16 gedreht werden, wozu es keinem Identifikationsmittel bedarf. Soll hingegen das Schließelement 7 von der gegenüberliegenden Seite des beweglichen Flügels aktiviert werden, so muss eine Kupplung 15 des Lesemoduls 3 mit einem Schließzylinderkern innenseitig im Schließzylindermodul 14 einkuppeln. Die Einkupplung der Kupplung 15 erfolgt dann, wenn über die Kommunikationseinrichtung im Lesemodul 3 eine Identifikation des Identifikationsmittels erfolgt ist. Hierfür weist das Lesemodul 3 eine Elektronik auf, die durch die Brennstoffzelle 2 gespeist ist. Ferner kann die Kupplung 15 oder zusätzlich eine Motoreinheit im Lesemodul 3 gespeist werden.

Ist der elektronische Schließzylinder 1 als vollautomatisch wirkender Schließzylinder 1 ausgeführt, weist dieser einen Motor auf, so dass die Drehung des Schließelementes 7 elektromotorisch aktiviert wird, und eine Person muss das Lesemodul 3 nicht händisch bedienen, indem dieses beispielsweise ebenfalls um die Längsachse 16 rotiert wird. Dabei wird die Motoreinheit von der Brennstoffzelle 2 gespeist. Ist der elektronische Schließzylinder 1 als halbautomatischer Schließzylinder 1 ausgeführt, kuppelt bei positiver Identifikation des Identifikationsmittels über die Kommunikationseinrichtung im Lesemodul 3 lediglich die Kupplung 15 ein, und durch manuelle Drehung des Lesemoduls 3 kann das Schließelement 7 ebenfalls um die Längsachse 16 gedreht werden. Ist die Brennstoffzelle 2 in der Aufnahmetasche 8 eingebracht, so kann die Kappe 13 auf das zylinderförmige Lesemodul 3 aufgesetzt und verrastet werden.

Im Ergebnis ist ein elektronischer Schließzylinder 1 mit einer vorteilhaften Einrichtung zur Energieversorgung geschaffen, und das Ausführungsbeispiel des Schließzylinders 1 in den Figuren 1 bis 3 zeigt, dass die Brennstoffzelle 2 austauschbar im Schließzylinder 1 aufgenommen sein kann.

Figur 4 zeigt eine Kommunikationseinrichtung 5 zur Kommunikation mit einem Identifikationsmittel 6, welches beispielsweise von einer Person mitgeführt werden kann. Nähert sich die Person dem elektronischen Schließzylinder 1 in einer Schließvorrichtung, so kann bereits eine Kommunikation mit dem Identifikationsmittel 6 erfolgen, und die Kommunikationseinrichtung 5 erkennt, ob die Person über das Identifikationsmittel 6 authentifiziert ist, die Schließvorrichtung für den beweglichen Flügel zu öffnen oder auch zu schließen. Die Kommunikationsstrecke zwischen dem Identifikationsmittel 6 und einer Eingabeeinrichtung 9 kann auch eine sehr kurze Wegstrecke erfordern, so dass das Identifikationsmittel 6, beispielsweise in Form einer Identifikationskarte oder eine Chipkarte, unmittelbar vor die Eingabeeinrichtung 9 gehalten werden muss. Durch die Auswerteeinrichtung 10 erfolgt die Entscheidung, ob das Stellglied 12, beispielsweise in Form der Kupplung 15 oder der Motoreinheit, aktiviert werden soll oder nicht. Weiterhin kann über eine zusätzliche Schnittstelle 11 eine Kommunikation mit der Auswerteeinrichtung 10 erfolgen. Ist die Identifikation des Identifikationsmittels 6 über die Eingabeeinrichtung 9 positiv durch die Auswerteeinrichtung 10 ausgewertet, so wird das Stellglied 12 aktiviert und die Person kann beispielsweise den beweglichen Flügel passieren. Die Darstellung zeigt ferner eine Brennstoffzelle 2 in schematischer Weise, die sowohl die Eingabeeinrichtung 9, die Auswerteeinrichtung 10 als auch das Stellglied 12 mit elektrischer Energie versorgt.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten, räumliche Anordnungen und Verfahrensschritte, können sowohl für sich als auch in den verschiedensten Kombinationen erfindungswesentlich sein.

### Bezugszeichenliste

- 1: elektronischer Schließzylinder
- 2: Brennstoffzelle
- 3: Lesemodul
- 4: Knauf
- 5: Kommunikationseinrichtung
- 6: Identifikationsmittel
- 7: Schließelement
- 8: Aufnahmetasche
- 9: Eingabeeinrichtung
- 10: Auswerteeinrichtung
- 11: Schnittstelle
- 12: Stellglied
- 13: Kappe
- 14: Schließzylindermodul
- 15: Kupplung
- 16: Längsachse

## Patentansprüche

1. Elektronischer Schließzylinder (1) einer Schließvorrichtung für einen beweglichen Flügel wie eine Tür, ein Tor, ein Fenster oder dergleichen mit einer Einrichtung zur Energieversorgung, **dadurch gekennzeichnet, dass** der elektronische Schließzylinder (1) zur Bildung der Einrichtung zur Energieversorgung wenigstens eine Brennstoffzelle (2) aufweist.

2. Elektronischer Schließzylinder (1) nach Anspruch 1, **dadurch gekennzeichnet, dass** der Brennstoff der Brennstoffzelle (2) Wasserstoff und/oder Methanol und/oder ein weiteres Kohlenwasserstoff ist.

3. Elektronischer Schließzylinder (1) nach Anspruch 1 oder 2, **dadurch gekennzeichnet, dass** die Brennstoffzelle (2) als Hybrid- Brennstoffzelle ausgebildet ist, die wenigstens eine weitere Komponente wie ein Lithium-Polymer-Akkumulator, eine Brennstoffpumpe, einen Kontrollschaltkreis und/oder einen Brennstoffspeicher aufweist.

4. Elektronischer Schließzylinder (1) nach einem der Ansprüche 1 bis 3, **dadurch gekennzeichnet, dass** der Brennstoffspeicher auswechselbar im und/oder am Schließzylinder (1) angeordnet ist oder dass der Brennstoffspeicher eine Einrichtung zum Nachfüllen von Brennstoff in den Brennstoffspeicher aufweist.

5. Elektronischer Schließzylinder (1) nach einem der vorgenannten Ansprüche, **dadurch gekennzeichnet, dass** die Brennstoffzelle (2) lösbar im oder am Schließzylinder (1) angeordnet ist.

6. Elektronischer Schließzylinder (1) nach einem der vorgenannten Ansprüche, **dadurch gekennzeichnet, dass** die Brennstoffzelle (2) derart im oder am Schließzylinder (1) angeordnet ist, dass diese austauschbar ist, wenn der Schließzylinder (1) in der Schließvorrichtung eingebaut ist.

7. Elektronischer Schließzylinder (1) nach einem der vorgenannten Ansprüche, **dadurch gekennzeichnet, dass** der Schließzylinder (1) ein Lesemodul (3) und/oder einen Knauf (4) aufweist, wobei die Brennstoffzelle (2) im oder am Lesemodul (3) und/oder im Knauf (4) angeordnet ist.

8. Elektronischer Schließzylinder (1) nach einem der vorgenannten Ansprüche, **dadurch gekennzeichnet, dass** eine elektronische Kommunikationseinrichtung (5) zur draht- bzw. berührungslosen Kommunikation mit einem elektronischen Identifikationsmittel (8) vorgesehen und vorzugsweise im Schließzylinder (1) angeordnet ist, welche elektronische Kommunikationseinrichtung (5) mittels der Einrichtung zur Energieversorgung gespeist ist.

9. Elektronischer Schließzylinder (1) nach einem der vorgenannten Ansprüche, **dadurch gekennzeichnet, dass** eine Motoreinheit und/oder eine Kupplungseinheit im Schließzylinder (1) vorgesehen ist, durch die ein Schließelement (7) des Schließzylinders (1) aktivierbar ist, welche Motoreinheit bzw. Kupplungseinheit mittels der Einrichtung zur Energieversorgung gespeist ist.

10. Elektronischer Schließzylinder (1) nach einem der vorgenannten Ansprüche, **dadurch gekennzeichnet, dass** der Schließzylinder (1) und vorzugsweise das Lesemodul (3) des Schließzylinders (1) eine Aufnahmetasche (8) aufweist, in der die Brennstoffzelle (2) einsetzbar und elektrisch mit dem Schließzylinder (1) kontaktierbar ist.

11. Schließvorrichtung mit einem elektronischen Schließzylinder (1) für einen beweglichen Flügel wie eine Tür, ein Tor, ein Fenster oder dergleichen mit einer Einrichtung zur Energieversorgung, **dadurch gekennzeichnet, dass** eine Brennstoffzelle (2) vorgesehen ist, die zur Bildung der Einrichtung zur Energieversorgung im elektronischen Schließzylinder (1) angeordnet ist.
